# FASCICULE DE BREVET EUROPEEN

(11) **EP 2 219 140 B1**
(45) Date de publication et mention de la délivrance du brevet: **17.12.2014**
(21) Numéro de dépôt: 10153173.9
(22) Date de dépôt: 10.02.2010
(51) Int. Cl.: G06K 19/073

(54) **Entite électronique apte à communiquer avec un lecteur et procédé mis en oeuvre au sein d'une telle entité électronique**
Elektronische Einheit, die in der Lage ist, mit einem Leser zu kommunizieren, und Verfahren zur Umsetzung einer solchen elektronischen Einheit
Electronic entity capable of communicating with a reader and method implemented within such an electronic entity

(30) Priorité: 11.02.2009 FR 0950859
(43) Date de publication de la demande: 18.08.2010
(73) Titulaire: Oberthur Technologies, 92700 Colombes (FR)
(72) Inventeur: Denis, Sylvestre, 78800 Houilles (FR); Galan, Gérald, 92410 Ville d'Avray (FR)
(74) Mandataire: Santarelli

(56) Documents cités:
- EP-A- 2 031 548
- WO-A-01/31577
- WO-A-2005/069195
- WO-A-2008/092527
- WO-A2-2007/149747
- US-A1- 2007 152 829

## Description

L'invention concerne une entité électronique apte à communiquer avec un lecteur et un procédé mis en oeuvre dans une telle entité électronique.

Il est connu d'échanger des données entre une entité électronique et un lecteur par des moyens de communication sans contact. Il est alors fréquemment envisagé dans ce cas que l'entité électronique (par exemple une carte à microcircuit équipée de moyens de communication sans contact courte portée) émette automatiquement certaines des données qu'elle contient en réponse à une requête adéquate du lecteur.

Il se pose toutefois alors le problème déjà exposé par exemple dans la demande de brevet FR 2 888 976 que de telles données pourraient être émises involontairement et/ou à l'insu du détenteur de l'entité électronique, ce qui peut se révéler préjudiciable, par exemple lorsque les données concernées sont confidentielles.

D'autre part, la demande internationale de brevet WO2008/092527 A1 décrit un procédé pour permettre un accès aux données d'une carte sans contact, tel qu'un dispositif RFID. Un détecteur d'accélération intégré à la carte génère un signal. La carte teste si le signal généré par le détecteur d'accélération est conforme à un signal de référence prédéterminé. Un accès aux informations sur la carte est autorisé pour un lecteur, si le signal est conforme au signal de référence.

Dans le but d'apporter une solution simple et pratique au problème mentionné ci-dessus, l'invention propose une entité électronique selon la revendication 1.

L'utilisateur pourra ainsi contrôler l'émission de données par l'entité électronique en jouant sur la position de celle-ci.

L'utilisation d'un tel capteur dans une entité électronique est par exemple décrite dans le document US 2008/091 605 mais ne vise pas le problème technique rappelé ci-dessus.

Les moyens de traitement comprennent par exemple des moyens de communication sans contact avec le lecteur ; ces moyens de communication peuvent ainsi assurer la réception de la requête et l'émission des données.

Ces moyens de communication peuvent notamment être télé-alimentés par le lecteur. Il s'agit alors par exemple de moyens de communication passifs en l'absence de télé-alimentation mais activés lorsqu'ils sont approchés du lecteur. Le problème technique exposé ci-dessus existe en particulier dans ce cadre.

Les moyens de communication sont par exemple aptes à mettre en oeuvre une communication courte portée avec le lecteur, telle que selon la norme NFC ou ISO14443 comme expliqué dans la suite.

La condition précitée pour l'envoi des données est par exemple mise en oeuvre grâce à des moyens pour interdire un échange d'informations entre l'entité électronique et le lecteur si l'information indique que l'entité électronique est dans une orientation non comprise dans ledit ensemble.

Les moyens pour interdire l'échange peuvent en pratique désactiver un module de communication avec le lecteur. Les moyens pour interdire l'échange peuvent également inhiber l'exécution d'une application provoquant l'échange des données lorsqu'elle est exécutée par un processeur de l'entité électronique. On évite dans ce cadre d'avoir à modifier l'application elle-même, ce qui est particulièrement intéressant lorsque celle-ci nécessite une certification et ne peut donc être modifiée facilement. On peut prévoir dans ce cas que, lorsque le lecteur fait appel à l'application, il reçoive en réponse un message d'erreur indiquant que l'application (inhibée) n'est pas présente ou pas disponible.

Les moyens pour interdire l'échange peuvent aussi être conçus pour mettre fin à une communication entre l'entité et le lecteur sans mise en oeuvre d'instructions d'échange de données.

Les moyens pour interdire peuvent également en variante inhiber seulement la communication au lecteur de certaines données.

Lorsque l'entité électronique (par exemple un téléphone portable) comprend une carte à microcircuit (typiquement d'identification à un réseau de téléphonie mobile), la carte à microcircuit peut comporter le capteur de position. Ceci permet d'utiliser la présente solution en équipant l'entité électronique d'une telle carte, sans que les autres parties de l'entité électronique ne soient conçues à cet effet. On peut prévoir dans ce cas des moyens de configuration de la position de la carte dans l'entité électronique.

Les moyens de traitement peuvent, en particulier dans ce dernier cadre, être compris dans une carte de souscripteur à un réseau de téléphonie mobile conforme à la norme ISO7816.

On peut toutefois prévoir que le capteur de position (comme les moyens de communication courte-portée) soit compris dans le téléphone lui-même (c'est-à-dire en dehors de la carte).

L'orientation mesurée est par exemple une valeur angulaire par rapport à la verticale, définie par la gravité terrestre.

Dans l'exemple décrit dans la suite, l'entité électronique est un téléphone portable équipé d'une carte à microcircuit. D'autres entités électroniques peuvent naturellement être concernées, telles qu'un passeport électronique, une carte à microcircuit prise isolément (par exemple conforme à la norme ISO7816 ou de type carte à mémoire), ou une mémoire portative équipée d'un connecteur (telle qu'une clé USB).

L'invention propose ainsi également un procédé selon la revendication 13.

Les caractéristiques optionnelles présentées ci-dessus pour l'entité électronique peuvent éventuellement s'appliquer aussi à ce procédé.

D'autres caractéristiques et avantages de l'invention apparaîtront mieux à la lumière de la description qui suit, faite en référence aux dessins annexés dans lesquels :
- la figure 1 représente une entité électronique (ici un téléphone portable) conforme aux enseignements de l'invention ;
- la figure 2 représente en détail une carte à microcircuit équipant l'entité électronique de la figure 1 ;
- la figure 3 représente l'entité électronique de la figure 1 lors de sa coopération avec un lecteur ;
- la figure 4 représente un premier exemple de procédé conforme aux enseignements de l'invention ;
- la figure 5 représente un second exemple de procédé conforme aux enseignements de l'invention.

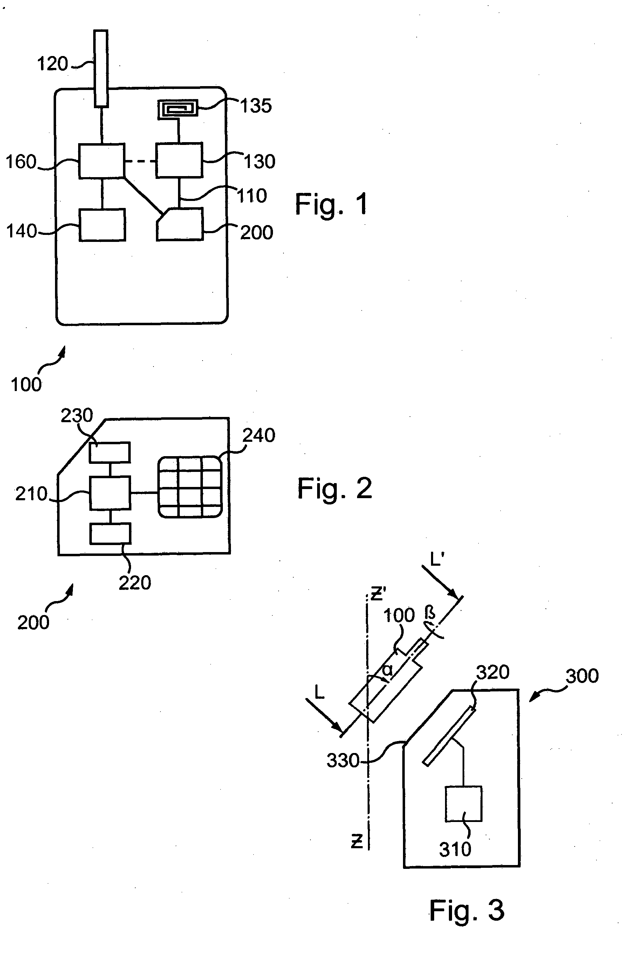

La **figure 1** représente un téléphone portable qui comprend un processeur 160 et des moyens de télécommunication (notamment une antenne) 120 de telle sorte que le processeur 160 est apte à échanger des données (qui peuvent notamment représenter un signal de voix) avec un réseau cellulaire de télécommunication, typiquement de téléphonie.

Le téléphone portable 100 porte (dans un logement prévu à cet effet et présentant des contacts) une carte amovible d'identification au réseau de téléphonie, sous forme d'une carte à microcircuit décrite plus en détail ci-dessous en référence à la figure 2. Cette carte est par exemple de type SIM (pour "*Subscriber Identity Module*"), USIM (pour "*Universal Subscriber Identity Module*") ou RUIM (pour "*Removable Universal Identity Module*").

La carte 200 (précisément son processeur 210 comme décrit plus bas) est en communication avec le processeur 160 du téléphone 100 au moyen de contacts 240 de la carte (également décrits plus bas) qui coopèrent avec les contacts du logement précédemment mentionnés.

Le téléphone 100 comprend également des moyens de communication sans contact formés ici d'un module sans contact 130 et d'une antenne 135.

Le module sans contact 130 est ici en communication directe avec la carte 200, par exemple à travers une liaison de type SWP (pour "*Single Wire Protocol*") et le module sans contact 130 peut ainsi également échanger des données avec le processeur 210 de la carte 200.

En variante, on pourrait prévoir que le module sans contact 130 soit en communication avec le processeur 160 du téléphone 100 (comme représenté en pointillés sur la figure 1) et l'échange de données et/ou d'instructions entre le module sans contact 130 et la carte 200 (précisément son processeur 210) pourrait alors avoir lieu via le processeur 160.

Le module sans contact 130 et l'antenne 135 forment ici des moyens de communication sans contact courte portée, par exemple selon la norme NFC (pour "*Near Field Communication*" ou Communication en Champ Proche), avec une portée généralement inférieure à 20 cm, et typiquement inférieure à 10 cm.

De tels moyens de communication peuvent également être conformes à la norme ISO14443.

Selon une variante envisageable, les moyens de communication sans contact sont des moyens de communication à moyenne portée (c'est-à-dire d'une portée inférieure à 20 m), par exemple de type Bluethooth^{®}.

Le téléphone portable 100 comprend également une mémoire non volatile 140 associée au processeur 160.

La **figure 2** représente plus en détail la carte 200 déjà mentionnée.

Comme déjà indiqué, cette carte comprend des contacts 240 connectés au processeur 210 (typiquement un microprocesseur) de la carte 200. La carte 200 comprend également un capteur d'inclinaison 230 apte à déterminer l'orientation de la carte 200 (et donc du téléphone portable 100 du fait que la relation physique entre ces deux éléments est fixe puisque la carte 200 est reçue dans le logement du téléphone 100 comme déjà indiqué) par rapport à la verticale (définie par le champ de gravité terrestre). Le capteur d'inclinaison 230 est par exemple un inclinomètre ou un système à base de gyroscope, typiquement réalisé sous forme de MEMS (pour "*Micro Electro Mechanical System*").

Le capteur d'inclinaison 230 est connecté au processeur 210 afin d'échanger des données avec celui-ci, notamment des informations indicatives de l'inclinaison mesurée.

La carte 200 comprend également une mémoire non volatile 220 qui mémorise notamment au moins une plage de valeurs d'orientation correspondant à des positions autorisées et une application de communication sans contact (ci-après "*application sans contact*"), ces éléments et leur rôle dans le fonctionnement du téléphone portable et de la carte étant décrite plus en détail dans la suite. Plusieurs plages ou ensembles de valeurs d'orientation autorisant un échange de données peuvent être mémorisées dans la mémoire non volatile 220 (chaque ensemble étant éventuellement associé à une ou plusieurs applications), par exemple sous forme d'une bibliothèque d'orientations.

On remarque que les connexions entre éléments sont représentées sur les figures par une simple ligne par souci de simplification, même lorsqu'en réalité plusieurs fils (typiquement un bus) sont utilisés pour connecter électriquement les deux éléments concernés (ceci étant valable en figure 1 comme en figure 2).

L'ensemble formé du téléphone portable 100 et de la carte 200 possède comme déjà indiqué des moyens de communication sans contact 130, 135, ici portés par le téléphone 100. Selon une variante envisageable, la carte 200 pourrait comprendre, en sus ou en lieu et place de ces moyens de communication sans contact 130, 135 portés par le téléphone, des moyens de communication sans contact analogues (formés par exemple également d'un module sans contact et d'une antenne). Dans ce cas, le microprocesseur 210 de la carte 200 pourrait échanger des données à travers la liaison sans contact courte portée à travers ces moyens de communication inclus dans la carte au lieu de le faire à travers les moyens de communication 130, 135 du téléphone 100 comme cela sera décrit dans la suite.

On a schématiquement représenté sur la **figure 3** un lecteur 300 comprenant un module électronique 310 et une antenne 320 de telle sorte que le module électronique 310 est apte à entrer en communication avec le microprocesseur 210 de la carte 200 à travers les moyens de communication sans contact 130, 135 lorsque l'ensemble formé par le téléphone 100 et la carte 200 sont suffisamment proches de l'antenne 320 du lecteur 300, par exemple à une distance inférieure à 10 cm comme déjà indiqué.

On prévoit en outre que, selon des modalités expliquées ci-après, l'échange des données ne soit mise en oeuvre que lorsque le téléphone portable 100 est dans une orientation déterminée (telle qu'elle est mesurée par le capteur d'inclinaison 230).

Si l'on désigne par LL' la direction d'extension longitudinale du téléphone 100 et par ZZ' la verticale au point considéré, des données ne seront échangées entre le téléphone 100 (ici le microprocesseur 210 de la carte 200, mais en variante éventuellement le processeur 160) et le lecteur 300 que si l'angle α entre les directions ZZ' et LL' est égal à 45° avec une tolérance (par exemple de 25°), c'est-à-dire si l'angle tel que déterminé par le capteur d'inclinaison 230 est compris entre 20° et 70°.

Afin d'inciter l'utilisateur à disposer son téléphone portable 100 de la sorte, on peut prévoir que le lecteur 300 possède une face inclinée 330 avec une inclinaison égale à celle requise pour l'échange des données comme il vient d'être décrit.

On peut en outre prévoir que le capteur d'orientation 230 soit apte à déterminer la position (angle β) de la carte 200 et donc du téléphone portable 100, autour de son axe longitudinal LL' et à n'autoriser l'échange de données que lorsque l'angle β est dans une plage déterminée (qui correspond par exemple à une position du téléphone portable avec l'écran tourné vers le haut, également avec une tolérance).

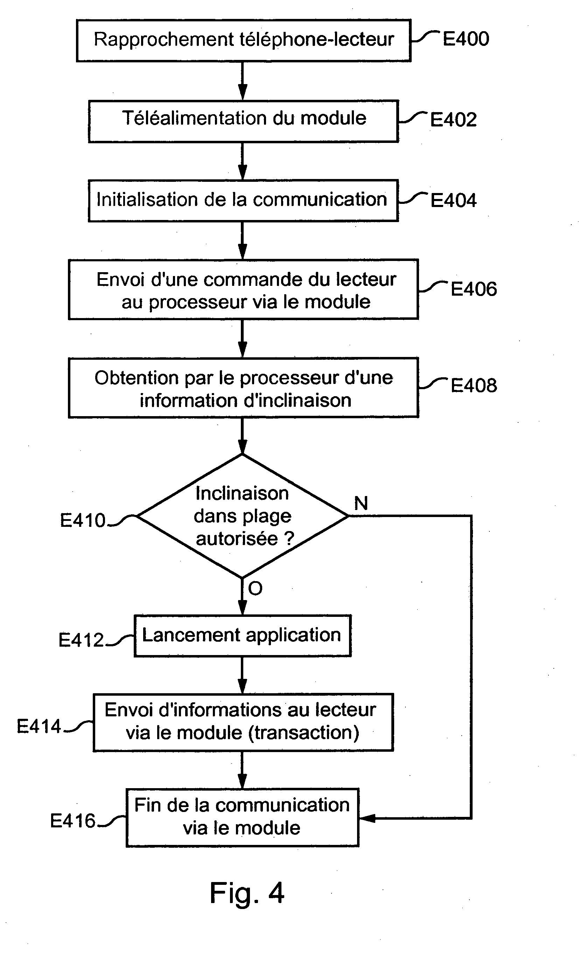

La **figure 4** représente les étapes principales d'un procédé mis en oeuvre conformément aux enseignements de l'invention.

Ce procédé commence à l'étape E400 par le rapprochement (par action de l'utilisateur) du téléphone 100 et du lecteur 300 (en particulier de l'antenne 330 de ce lecteur).

Ce rapprochement provoque la télé-alimentation du module sans contact 130 (étape E402).

Une communication est ainsi initialisée à l'étape E404 entre le module 310 du lecteur 300 et le module sans contact 130, ce qui permet notamment l'envoi d'une commande (ou requête) du module 310 du lecteur 300 au processeur 210 de la carte 200, via le module sans contact 130 et la connexion de type SWP 110 (étape E406). Cette commande vise le lancement au sein du processeur 210 de l'application sans contact mémorisée comme déjà indiqué dans la mémoire non volatile 220 afin de mettre en oeuvre un échange d'informations entre le processeur 210 et le module 310 du lecteur 300 selon un protocole déterminé, par exemple représentant une transaction financière.

Selon la variante déjà mentionnée dans laquelle les données sont échangées entre le module sans contact 130 et le processeur 210 de la carte 200 via le processeur 160 du téléphone portable 100, la commande précitée émise par le lecteur transitera par le processeur 160 et sera transmise de celui-ci à destination du processeur 210 par exemple sous la forme d'une commande selon la norme ISO7816, par exemple une commande de sélection d'une application.

Le procédé se poursuit quoi qu'il en soit à l'étape E408 à laquelle le processeur 210 interroge le capteur d'inclinaison 230 afin d'obtenir une information d'inclinaison (étape E408).

Le processeur 210 compare alors l'information d'inclinaison obtenue du capteur 230 à la plage de valeurs autorisées mémorisée dans la mémoire non volatile 220 afin de déterminer si l'orientation actuelle du téléphone 100 (et donc de la carte 200) fait partie des orientations dans lesquelles une transaction entre le processeur 210 et le lecteur 300 est autorisée (comme expliqué ci-dessus en référence à la figure 3).

Dans l'affirmative, on procède à l'étape E412 au lancement de l'application, ce qui aura notamment pour conséquence l'envoi d'informations à partir du processeur 210 et à destination du lecteur 300 (précisément de son module 310) à travers le module sans contact 130 afin de mettre en oeuvre la transaction financière précitée.

Selon une variante envisageable, l'application peut être lancée dans tous les cas (c'est-à-dire quelle que soit l'orientation mesurée), mais les données émises (sur commande de l'application) ne seront les données attendues (par exemple mémorisées dans la mémoire non volatile 220) que si l'orientation mesurée fait partie des orientations dans lesquelles une transaction est autorisée ; si l'orientation mesurée ne fait pas partie de ces orientations autorisées, l'application n'émettra pas les données attendues mais un message d'erreur (ou des données aléatoires ou aberrantes, telles qu'une suite de zéros). On pourra naturellement prévoir dans ce cadre que certaines données (non-critiques pour la sécurité) soient émises quelle que soit l'orientation mesurée tandis que la communication d'autres données soit inhibée lorsque l'orientation mesurée ne fait pas partie des orientations autorisées.

La transaction autorisée par l'orientation déterminée du téléphone portable 100 (en pratique par la vérification positive de l'étape E410) peut naturellement inclure d'autres échanges d'informations que l'envoi d'informations qui vient d'être décrit à titre d'exemple.

Une fois la transaction réalisée, il est mis fin à l'étape E416 à la communication sans contact entre le module 130 et le lecteur 300.

Dans la négative à l'étape E410, on met fin directement à la communication à l'étape E416 comme montré en figure 4.

La mise en oeuvre de la transaction (par exemple financière) n'est ainsi autorisée que lorsque le processeur 210 détermine à l'aide des informations reçues du capteur 230 que l'orientation du téléphone 100 est dans une plage prédéterminée correspondant à une autorisation de mise en oeuvre de la transaction.

Dans l'exemple qui vient d'être décrit, la vérification de l'inclinaison est mise en oeuvre par le processeur 210 avant exécution de l'application sans contact (c'est-à-dire par la mise en oeuvre d'une autre application, par exemple du système d'exploitation de la carte 200). En variante, on pourrait prévoir que la comparaison de l'inclinaison déterminée par le capteur aux valeurs mémorisées soit mise en oeuvre par l'application sans contact elle-même.

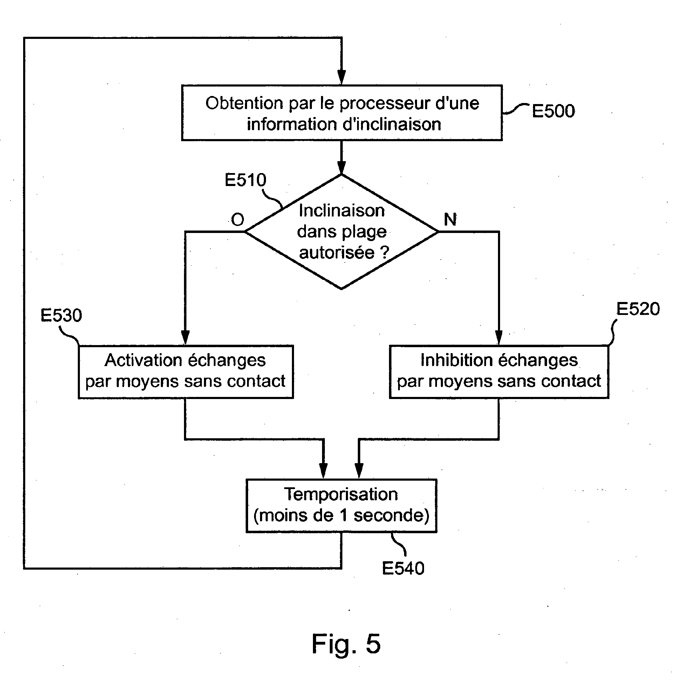

La **figure 5** représente certaines étapes d'un procédé selon un second exemple de mise en oeuvre de l'invention.

Selon ce mode de réalisation, le processeur obtient périodiquement (par interrogation du capteur d'inclinaison 230) une information d'inclinaison représentant l'orientation du téléphone portable 100 (étape E500).

Le processeur 210 détermine alors si l'inclinaison est dans une plage autorisée (d'après les valeurs définissant la plage autorisée mémorisées dans la mémoire non volatile 220).

Si l'inclinaison n'est pas dans une plage autorisée, on procède à l'étape E520 à l'inhibition des échanges à travers les moyens sans contact 130, 135.

Selon une première possibilité de réalisation, cette inhibition est réalisée par l'envoi par le processeur 210 d'une commande de désactivation au module sans contact 130 de telle sorte que celui-ci ne permette aucun échange d'informations, même en cas de rapprochement du téléphone 100 (et par conséquent de l'antenne 135) de l'antenne 320 du lecteur 300.

Selon une seconde possibilité de réalisation, l'inhibition des échanges peut être réalisée de manière logicielle, par exemple par l'écriture dans une mémoire (telle que la mémoire non volatile 220) d'une information inhibant le lancement de l'application sans contact mémorisé en mémoire non volatile 220 ; cette information d'inhibition est par exemple un drapeau (ou "*flag*") formé par un bit dédié à cet effet. En variante, on peut prévoir de réaliser l'inhibition par l'effacement (c'est-à-dire par l'écriture d'une valeur par exemple nulle) d'un pointeur indiquant l'adresse de stockage dans la mémoire non volatile 220 de l'application sans contact.

Selon une variante envisageable, on peut prévoir d'inhiber non pas l'application elle-même, mais l'émission par l'interface sans contact de certaines données obtenues à partir des données mémorisée dans la mémoire non volatile 220 (une telle inhibition étant réalisée de manière logicielle). On peut dans ce cadre utiliser un tableau, mémorisé par exemple en mémoire non volatile, qui indique, pour chaque donnée (ou type de données), les orientations dans lesquelles une émission des données concernées est autorisée.

S'il est au contraire déterminé que l'inclinaison mesurée par le capteur 230 est dans la plage autorisée mémorisée en mémoire non volatile 220 à l'étape E510, on procède à l'étape E530 à l'activation des échanges par les moyens sans contact.

Selon la première possibilité de réalisation décrite ci-dessus, cette activation est réalisée par l'envoi par le microprocesseur 210 d'une commande d'activation à destination du module sans contact 130.

Selon la seconde possibilité de réalisation, l'activation est réalisée par l'écriture d'une information d'autorisation dans une mémoire associée au microprocesseur 210, par exemple par la mise à une valeur correspondant à cette autorisation du drapeau précité ou par l'écriture de l'adresse de l'application sans contact dans le pointeur précité.

On remarque que les deux possibilités envisagées peuvent être combinées.

Que les échanges soient activés (étape E530) ou inhibés (étape E520), on procède à une temporisation (typiquement de moins d'une seconde) à l'étape E540 avant de mettre en oeuvre à nouveau l'étape E500. Comme déjà indiqué, l'étape E500 est ainsi mise en oeuvre de façon périodique avec une périodicité par exemple comprise entre 2 et 50 fois par seconde.

On comprend que, grâce au procédé qui vient d'être décrit, le rapprochement du téléphone 100 du lecteur 300 aura pour conséquence la mise en oeuvre d'une communication sans contact via les moyens de communication 130, 135 et le lancement de l'application sans contact seulement si ces différents éléments sont activés, c'est-à-dire lorsqu'il a été déterminé à l'étape E510 que l'inclinaison du téléphone portable est dans une plage correspondant à l'autorisation donnée par l'utilisateur (ou par le dispositif) à échanger des données avec le lecteur 300.

On remarque que dans les exemples qui viennent d'être décrits, on déduit le mouvement ou la position du téléphone portable 100 à partir des mouvements ou de la position de la carte à microcircuit 200 du fait que ces deux éléments sont physiquement liés.

Il peut ainsi être souhaitable de configurer le positionnement de la carte à microcircuit 200 dans le téléphone portable 100. Il s'agit d'une étape de configuration qui pourra naturellement n'être réalisée que lors de la première introduction de la carte à microcircuit 200 dans le téléphone portable 100.

Selon une première possibilité de réalisation, le positionnement de la carte 200 dans le téléphone portable 100 pourra être indiqué par l'utilisateur à l'aide du clavier du téléphone en réponse à l'affichage d'un menu (mémorisé dans la carte à microcircuit) correspondant au moyen de l'écran du téléphone.

Selon une seconde possibilité de réalisation, une application mise en oeuvre par le processeur 210 provoque l'affichage sur l'écran d'un message demandant à l'utilisateur de positionner successivement le téléphone portable 100 selon plusieurs orientations particulières.

La détection par le capteur 230 situé dans la carte 200 des orientations successives du téléphone 100 réalisé par l'utilisateur permet alors au processeur 210 de déduire l'orientation relative de la carte à microcircuit 200 et du téléphone portable 100.

Les modes de réalisation qui précèdent ne sont que des exemples possibles de mise en oeuvre de l'invention qui ne s'y limite pas.

## Revendications

1. Entité électronique comprenant:
- des moyens de traitement (135, 130, 210) aptes à recevoir une requête en provenance d'un lecteur (300) ;
- un capteur de position (230) apte à mesurer une orientation (a) de l'entité électronique (100, 200) et à délivrer aux moyens de traitement (135, 130, 210) une information indicative de l'orientation mesurée (a),
**caractérisée en ce qu'**elle comprend:
- une carte à microcircuit (200) incluant le capteur de position (230), la carte étant une carte amovible d'identification à un réseau de téléphonie,
les moyens de traitement (135, 130, 210) étant aptes à émettre automatiquement des données en réponse à la requête et à destination du lecteur (300) si l'information indique que l'entité électronique est dans une orientation (a) comprise dans un ensemble d'orientations prédéterminé, et sinon, émettre des données aléatoires à destination du lecteur (300).

2. Entité électronique selon la revendication 1, **caractérisée en ce que** les moyens de traitement comprennent des moyens de communication sans contact (135, 130) avec le lecteur (300) aptes à recevoir la requête et à émettre les données.

3. Entité électronique selon la revendication 2, **caractérisée en ce que** les moyens de communication (135, 130) sont aptes à mettre en oeuvre une communication courte portée avec le lecteur.

4. Entité électronique selon l'une des revendications 1 à 3, **caractérisée par** des moyens pour interdire un échange d'informations entre l'entité électronique (100, 200) et le lecteur (300) si l'information indique que l'entité électronique (100, 200) est dans une orientation (a) non comprise dans ledit ensemble.

5. Entité électronique selon la revendication 4, **caractérisée en ce que** les moyens pour interdire l'échange sont aptes à désactiver un module (130) de communication avec le lecteur.

6. Entité électronique selon la revendication 4, **caractérisée en ce que** les moyens pour interdire l'échange sont aptes à inhiber l'exécution d'une application provoquant l'échange des données lorsqu'elle est exécutée par un processeur (210) de l'entité électronique (100, 200).

7. Entité électronique selon la revendication 4, **caractérisée en ce que** les moyens pour interdire l'échange sont aptes à inhiber l'émission de certaines données.

8. Entité électronique selon la revendication 4, **caractérisée en ce que** les moyens pour interdire l'échange sont aptes à mettre fin à une communication entre l'entité (100, 200) et le lecteur (300) sans mise en oeuvre d'instructions d'échange de données.

9. Entité électronique selon l'une des revendications 1 à 8, **caractérisée en ce que** la carte est de type SIM, USIM ou RUIM.

10. Entité électronique selon l'une des revendications 1 à 9, **caractérisée par** des moyens de configuration de la position de la carte dans l'entité électronique.

11. Entité électronique selon l'une des revendications 1 à 10, **caractérisée en ce que** les moyens de traitement sont compris dans une carte de souscripteur à un réseau de téléphonie mobile conforme à la norme ISO7816.

12. Entité électronique selon l'une des revendications 1 à 11, **caractérisée en ce que** l'orientation mesurée (a) est une valeur angulaire par rapport à la verticale (ZZ').

13. Procédé mis en oeuvre par des moyens de traitement d'une entité électronique comprenant un capteur de position et une carte à microcircuit incluant le capteur de position, **caractérisé en ce que** la carte est une carte amovible d'identification à un réseau de téléphonie et **en ce que** le procédé comprend les étapes suivantes :
- réception (E406) d'une requête en provenance d'un lecteur ;
- réception (E408) d'une information indicative de l'orientation de l'entité électronique mesurée par le capteur ;
- émission automatique de données (E414) en réponse à la requête et à destination du lecteur si l'information indique que l'entité électronique est dans une orientation comprise dans un ensemble d'orientations prédéterminé, et sinon, émission de données aléatoires à destination du lecteur.

## Patentansprüche

1. Elektronische Entität, die Folgendes umfasst:
- Verarbeitungsmittel (135, 130, 210), die eine von einem Leser (300) stammende Anforderung empfangen können;
- einen Positionssensor (230), der eine Orientierung (a) der elektronischen Entität (100, 200) messen kann und an die Verarbeitungsmittel (135, 130, 210) Informationen liefern kann, die die gemessene Orientierung (a) angeben, **dadurch gekennzeichnet, dass** sie Folgendes umfasst:
- eine Mikroschaltungskarte (200), die den Positionssensor (230) enthält, wobei die Karte eine entnehmbare Identifizierungskarte für ein Telefonnetz ist,
wobei die Verarbeitungsmittel (135, 130, 210) in Reaktion auf die Anforderung automatisch Daten zu dem Leser (300) senden können, falls die Informationen angeben, dass die elektronische Entität in einer Orientierung (a) ist, die in einer vorgegebenen Gesamtheit von Orientierungen enthalten ist, und andernfalls Zufallsdaten zu dem Leser (300) senden können.

2. Elektronische Entität nach Anspruch 1, **dadurch gekennzeichnet, dass** die Verarbeitungsmittel Mittel (135, 130) für die drahtlose Kommunikation mit dem Leser (300), die die Anforderung empfangen und die Daten senden können, umfassen.

3. Elektronische Entität nach Anspruch 2, **dadurch gekennzeichnet, dass** die Kommunikationsmittel (135, 130) eine kurzreichweitige Kommunikation mit dem Leser ausführen können.

4. Elektronische Entität nach einem der Ansprüche 1 bis 3, **gekennzeichnet durch** Mittel, um einen Informationsaustausch zwischen der elektronischen Entität (100, 200) und dem Leser (300) zu verhindern, falls die Informationen angeben, dass die elektronische Entität (100, 200) in einer Orientierung (a) ist, die nicht in der Gesamtheit enthalten ist.

5. Elektronische Entität nach Anspruch 4, **dadurch gekennzeichnet, dass** die Mittel zum Verhindern des Austausches ein Modul (130) für die Kommunikation mit dem Leser deaktivieren können.

6. Elektronische Entität nach Anspruch 4, **dadurch gekennzeichnet, dass** die Mittel zum Verhindern des Austausches die Ausführung einer Anwendung, die den Austausch von Daten hervorruft, wenn sie durch einen Prozessor (210) der elektronischen Entität (100, 200) ausgeführt wird, verhindern können.

7. Elektronische Entität nach Anspruch 4, **dadurch gekennzeichnet, dass** die Mittel zum Verhindern des Austausches das Senden bestimmter Daten verhindern können.

8. Elektronische Entität nach Anspruch 4, **dadurch gekennzeichnet, dass** die Mittel zum Verhindern des Austausches eine Kommunikation zwischen der Entität (100, 200) und dem Leser (300) beenden können, ohne Befehle für den Datenaustausch auszuführen.

9. Elektronische Entität nach einem der Ansprüche 1 bis 8, **dadurch gekennzeichnet, dass** die Karte vom Typ SIM, USIM oder RUIM ist.

10. Elektronische Entität nach einem der Ansprüche 1 bis 9, **gekennzeichnet durch** Mittel zum Konfigurieren der Position der Karte in der elektronischen Entität.

11. Elektronische Entität nach einem der Ansprüche 1 bis 10, **dadurch gekennzeichnet, dass** die Verarbeitungsmittel in einer Teilnehmerkarte eines mobilen Telefonnetzes gemäß der Norm ISO7816 enthalten sind.

12. Elektronische Entität nach einem der Ansprüche 1 bis 11, **dadurch gekennzeichnet, dass** die gemessene Orientierung (a) ein Winkelwert in Bezug auf die Vertikale (ZZ') ist.

13. Verfahren, das von Verarbeitungsmitteln einer elektronischen Entität ausgeführt wird, die einen Positionssensor und eine Mikroschaltungskarte umfasst, **dadurch gekennzeichnet, dass** die Karte eine entnehmbare Identifizierungskarte für ein Telefonnetz ist und dass das Verfahren die folgenden Schritte umfasst:
- Empfangen (E406) einer Anforderung von einem Leser;
- Empfangen (E408) von Informationen, die die Orientierung der elektronischen Entität, die von dem Sensor gemessen wird, angegeben;
- automatisches Senden von Daten (E414) in Reaktion auf die Anforderungen zu dem Leser, falls die Informationen angeben, dass die elektronische Entität in einer Orientierung ist, die in einer vorgegebenen Gesamtheit von Orientierungen enthalten ist, und andernfalls Senden von Zufallsdaten zu dem Leser.

## Claims

1. Electronic entity comprising:
- processing means (135, 130, 210) capable of receiving a request from a reader (300);
- a position sensor (230) capable of measuring an orientation (a) of the electronic entity (100, 200) and of delivering to the processing means (135, 130, 210) an item of information indicative of the measured orientation (a),
**characterised in that** it comprises:
- a chip card (200) including the position sensor (230), the card being a removable card for identification with a telephony network,
the processing means (135, 130, 210) being capable of automatically transmitting data to the reader (300) in response to the request if the information indicates that the electronic entity is in an orientation (a) included in a predetermined set of orientations, and if not, transmitting random data to the reader (300).

2. Electronic entity according to claim 1, **characterised in that** the processing means comprise means (135, 130) for a contactless communication with the reader (300) that are capable of receiving the request and of transmitting the data.

3. Electronic entity according to claim 2, **characterised in that** the communication means (135, 130) are capable of executing a short-range communication with the reader.

4. Electronic entity according to one of claims 1 to 3, **characterised by** means for preventing an exchange of information between the electronic entity (100, 200) and the reader (300) if the information indicates that the electronic entity (100, 200) is in an orientation (a) not included in said set.

5. Electronic entity according to claim 4, **characterised in that** the means for preventing the exchange are capable of deactivating a module (130) for communication with the reader.

6. Electronic entity according to claim 4, **characterised in that** the means for preventing the exchange are capable of inhibiting the execution of an application causing the exchange of the data when it is executed by a processor (210) of the electronic entity (100, 200).

7. Electronic entity according to claim 4, **characterised in that** the means for preventing the exchange are capable of inhibiting the transmission of certain data.

8. Electronic entity according to claim 4, **characterised in that** the means for preventing the exchange are capable of terminating a communication between the entity (100, 200) and the reader (300) without executing data-exchange instructions.

9. Electronic entity according to one of claims 1 to 8, **characterised in that** the card is of the SIM, USIM or RUIM type.

10. Electronic entity according to one of claims 1 to 9, **characterised by** means for configuring the position of the card in the electronic entity.

11. Electronic entity according to one of claims 1 to 10, **characterised in that** the processing means are included in a card of a subscriber to a mobile telephone network complying with the ISO7816 standard.

12. Electronic entity according to one of claims 1 to 11, **characterised in that** the measured orientation (a) is an angular value relative to the vertical (ZZ').

13. Method used by processing means of an electronic entity comprising a position sensor and'a chip card including the position sensor, **characterised in that** the card is a removable card for identification with a telephony network and **in that** the method comprises the following steps:
- reception (E406) of a request from a reader;
- reception (E408) of an item of information indicative of the orientation of the electronic entity measured by the sensor;
- automatic transmission of data (E414) to the reader in response to the request if the item of information indicates that the electronic entity is in an orientation included in a predetermined set of orientations, and if not, transmission of random data to the reader.
